# EUROPÄISCHE PATENTSCHRIFT

(11) **EP 4 196 308 B1**
(45) Veröffentlichungstag und Bekanntmachung des Hinweises auf die Patenterteilung: **20.03.2024**
(21) Anmeldenummer: 21758681.7
(22) Anmeldetag: 11.08.2021
(51) Int. Cl.: B23K 9/067, B23K 9/09, B23K 9/095, B23K 9/167, B23K 9/29

(54) **VERFAHREN UND SCHWEISSVORRICHTUNG ZUM BERÜHRUNGSLOSEN ZÜNDEN EINES LICHTBOGENS**
METHOD OF AND DEVICE FOR CONTACTLESS IGNITION OF AN ARC
PROCÉDÉ ET DISPOSITIF D'ALLUMAGE SANS CONTACT D'UN ARC ÉLECTRIQUE

(30) Priorität: 13.08.2020 EP 20190851
(43) Veröffentlichungstag der Anmeldung: 21.06.2023
(73) Patentinhaber: FRONIUS INTERNATIONAL GmbH, 4643 Pettenbach (AT)
(72) Erfinder: WILLINGER, Martin, 4600 Wels-Thalheim (AT); LATTNER, Peter, 4600 Wels-Thalheim (AT)
(74) Vertreter: Patentanwälte Pinter & Weiss OG
(86) Internationale Anmeldenummer: PCT/EP2021/072371
(87) Internationale Veröffentlichungsnummer: WO 2022/034132

(56) Entgegenhaltungen:
- EP-A1- 0 667 205
- DE-A1- 1 615 363
- JP-A- H10 328 827

## Beschreibung

Die gegenständliche Offenbarung betrifft eine Schweißvorrichtung und ein Verfahren zum berührungslosen Zünden eines Lichtbogens zwischen einer Elektrode eines Schweißkopfes und einer Materialoberfläche eines Werkstücks für einen Schweißprozess.

Konkret werden im Zuge der nachfolgenden Ausführungen DC-Schweißprozesse, bei denen während eines Schweißvorgangs eine Schweißspannung mit nur einer Polarität verwendet wird, und AC-Schweißprozesse, bei denen während eines Schweißvorgangs die Polarität der Schweißspannung wechselt, betrachtet.

Sowohl bei DC-Schweißprozessen als auch bei AC-Schweißprozessen wird zu Beginn des Schweißprozesses im Rahmen eines Zündvorgangs ein Zündspannungsimpuls (Initialzündung) erzeugt, um den Lichtbogen initial zu erzeugen. Bei AC-Schweißprozesses werden überdies bei Wechsel der Polarität der Schweißspannung während des Schweißvorgangs, d.h. beim Nulldurchgang, Zündspannungsimpulse (Nulldurchgangszündung) erzeugt, um den Lichtbogen aufrecht zu erhalten, d.h. einen Abriss des Lichtbogens zu verhindern, was ebenso einem Zündvorgang entspricht.

Zum berührungslosen Zünden eines Lichtbogens zwischen einer Elektrode eines Schweißgeräts und einem Werkstück kann zwischen der Elektrode und dem Werkstück ein Zündspannungsimpuls, durch den der Bereich zwischen Elektrode und Werkstück ionisiert wird, angelegt werden, sodass der Lichtbogen im ionisierten Bereich zündet. Falls keine Zündung erfolgt (d.h. sich kein Lichtbogen bildet) wird nach einer kurzen Pause ein weiterer Zündspannungsimpuls mit gleicher Polarität angelegt. Sobald der Lichtbogen gezündet hat, wird eine Schweißspannung angelegt, mit der der Lichtbogen während des Schweißens aufrechterhalten wird.

Bei DC-Schweißprozessen (insbesondere zum Schweißen von Stahl und hochlegiertem Stahl) kann mit einem negativen Zündspannungsimpuls gestartet ("Zünden am Minuspol") werden, da auch das Schweißen mit einem negativen Schweißstrom erfolgt.

Einige modernere Schweißgeräte bieten auch die Möglichkeit, die Zündung mit einem positiven Zündspannungsimpuls zu starten ("Zünden am Pluspol"). Da das Schweißen üblicherweise mit einem negativen Schweißstrom erfolgen soll, erfolgt nach dem Zünden ein Umpolen. Bei einer Wolframelektrode kann das Zünden am Pluspol beispielsweise das Zündverhalten und die Lichtbogenstabilität beim Schweißstart verbessern. Ein Zünden am Pluspol führt zu einer erhöhten Belastung der Elektrode.

Jedoch kann bei glatten, polierten Oberflächen die Zündung am Pluspol erschwert werden und es kann sein, dass der bereits gezündete Lichtbogen beim Umpolen erlischt bzw. dass der Lichtbogen generell nicht zündet.

In der Praxis muss der Anwender die gewünschte Zündeinstellung bzw. Zündpolarität auswählen und er muss diese umstellen, falls sich die gewählte Einstellung für die vorliegende Aufgabe nicht eignet, was sich durch häufige Zündaussetzer unangenehm bemerkbar macht. Dies kann sich auch auf die Qualität der Schweißnaht negativ auswirken. Das Auffinden der geeigneten Einstellung erfolgt dabei oft durch "Versuch und Irrtum", da dem Anwender meist nicht bewusst ist, warum (und wie genau) sich die beiden Zündmethoden voneinander unterscheiden, bzw. welche Parameter dabei wichtig sind und warum in einem gegebenen Fall das eine oder das andere Zündverfahren besser funktioniert. Auch kann es sein, dass sich Parameter während des Schweißens ändern, beispielsweise wenn am selben Werkstück über einer bereits hergestellten Schweißnaht geschweißt werden soll und diese Schweißnaht nun beispielsweise eine geringere Oberflächenrauigkeit aufweist, als das Werkstück und daher das gewählte Zündverfahren plötzlich weniger zuverlässig ist.

Die optimalen Zündeinstellungen bzw. die am besten geeignete Zündpolarität sind von zahlreichen Materialfaktoren abhängig, wie etwa der Oberflächenrauigkeit, der chemischen Zusammensetzung, kristallographischen Eigenschaften, Korngröße, Beschichtungen, etc. Insbesondere durch eine bereits vorhandene Schweißnaht oder eine andere z.B. lokale Temperaturbehandlung einer gegebenen Materialoberfläche können sich z.B. Korngrößen und kristallographische Eigenschaften und folglich das Zündverhalten ändern. Ferner können auch Seigerungen und Entmischungen einer z.B. erstarrten Schmelze (Schmelzgut) zu einem unterschiedlichen Zündverhalten führen. Auch ist bekannt, dass Poren, Einschlüsse, Lunker, Schlacke-Reste und andere Unregelmäßigkeiten der Oberfläche das Zündverhalten beeinflussen können. Ferner können auch durch Wärmebehandlung erzeugte Oxidschichten an der Oberfläche, aber auch eine vorhergehende Einbringung von beispielsweise Stickstoff oder Kohlenstoff in die Oberfläche, wie sie beispielsweise bei Oberflächenprozessen wie Nitrieren, Carbonitrieren, Plasmanitrieren etc. erzeugt werden, das Zündverhalten ändern. Ebenfalls führen z.B. lokale mechanische Oberflächenbehandlungen wie beispielsweise Fräsen, Schleifen, Polieren, Läppen, etc. bzw. mechanische Oberflächenbehandlungen im Allgemeinen zu einem geänderten Zündverhalten. Auch eventuell vorhandene Kontaminationen bzw. Kontaminationsschichten an der Oberfläche bzw. Rückstände von Reinigungsmitteln oder auch sich über die Zeit gebildete atmosphärenbedingte Absorptionssschichten oder aber auch eventuelle über die Zeit durch Atmosphäreneinfluss gebildete Reaktionschichten können einen Einfluss auf das Zündverhalten des Lichtbogens haben. Es ist daher auch für erfahrene Anwender nicht immer klar, welche Einstellungen und welche bevorzugte Polarität für eine vorliegende Aufgabe optimal sind. Ferner können Oberflächen, auch wenn visuell für den Schweißer nicht immer unbedingt sichtbar, ein derart inhomogenes Zündverhalten aufweisen, dass für jede Anwendung die Zündeinstellung individuell angepasst werden müsste.

Auch aus dem Stand der Technik bekannte Ansätze zum Zünden von Lichtbögen, wie sie beispielsweise aus den Schriften EP 0 667 205 A1 (beschreibend alle Merkmale und Schritte des Oberbegriffes der Ansprüche 1 und 10) oder JP H10 328827 A hervorgehen greifen die Problematik von mangelhaften Zündeinstellungen oder mangelhaftem Zündverhalten nicht oder nur unzureichend auf.

Es ist eine Aufgabe der gegenständlichen Offenbarung, Vorrichtungen und Verfahren bereitzustellen, mit denen die Zündsicherheit beim berührungslosen Zünden des Lichtbogens verbessert wird.

Gemäß einem Aspekt betrifft die gegenständliche Offenbarung ein Verfahren zum berührungslosen Zünden eines Lichtbogens zwischen einer Elektrode eines Schweißkopfes und einer Materialoberfläche eines Werkstücks. Zwischen der Elektrode und der Materialoberfläche wird ein erster Zündspannungsimpuls mit einer ersten oder zweiten Polarität erzeugt, wobei der Lichtbogen nach dem Zünden und gegebenenfalls nach einem Umpolen mit der zweiten Polarität oder einer wechselnden Polarität aufrechterhalten wird, wobei im Falle eines Zündversagens nach dem ersten Zündspannungsimpuls bis zur erfolgreichen Zündung des Lichtbogens eine Abfolge an Zündspannungsimpulsen gemäß einem Abfolgeschema erzeugt wird, wobei das Abfolgeschema Zündspannungsimpulse mit der ersten Polarität und Zündspannungsimpulse mit der zweiten Polarität umfasst und wobei zwischen Zündspannungsimpulsen mit der ersten Polarität und der zweiten Polarität eine Zündpause vorgesehen ist. Dadurch kann die Zündung des Lichtbogens stets mit dem optimalen Zündverfahren erfolgen, ohne dass ein Bedienereingriff erforderlich ist. Zündaussetzer werden vermieden. Das Abfolgeschema ist vorzugsweise durch ein sich regelmäßig wiederholendes Muster an Zündspannungsimpulsen unterschiedlicher Polarität definiert.

Eine Ausführungsform gemäß der gegenständlichen Offenbarung würde ebenso einschließen, dass der Betrag der Zündspannung bzw. des Zündstroms der ersten Polarität vom Betrag der Zündspannung bzw. des Zündstroms der zweiten Polarität abweicht. Eine weitere Ausführungsform gemäß der gegenständlichen Offenbarung würde ebenso einschließen, dass die Zeitdauer der Zündspannung bzw. des Zündstroms der ersten Polarität von der Zeitdauer der Zündspannung bzw. des Zündstroms der zweiten Polarität abweicht. Gegebenenfalls können auch aufeinanderfolgende Zündspannungsimpulse derselben Polarität sich hinsichtlich des Betrags und/oder der Länge voneinander unterscheiden.

Die Zündpause zwischen den Zündimpulsen kann systembedingt und/oder durch die Implementierung der Schweißvorrichtung bedingt und/oder eine vom Anwender geforderte Zündpause sein. Zwischen Zündimpulsen unterschiedlicher Polarität vorgesehene Zündpausen können hierbei genutzt werden, um zu überprüfen, ob bereits eine Zündung eines Lichtbogens stattgefunden hat.

Das Verfahren zum berührungslosen Zünden eines Lichtbogens kann auch als Zündvorgang bezeichnet werden. Ein Schweißprozess umfasst Zündvorgänge, in welchen der Lichtbogen gezündet wird, Schweißvorgänge, in denen der Lichtbogen brennt, und Leerlaufphasen, in welchen kein Lichtbogen brennt und auch keiner gezündet wird. Bei AC-Schweißprozessen kann auch während des Schweißvorgangs, bei einem Nulldurchgang des Schweißstroms, ein Zündvorgang erfolgen

Der Begriff "Polarität" bezieht sich jeweils auf die Polung der Elektrode. Die erste Polarität kann entweder eine positive oder eine negative Polung der Elektrode sein, die zweite Polarität ist durch die im Vergleich zur ersten Polarität umgekehrte Polarität definiert. Die Wahl der Polarität ist insbesondere abhängig vom zu verschweißenden Material, wobei die meisten Materialien mit einer negativ gepolten Elektrode geschweißt werden. In dem Fall entspricht die zweite Polarität der negativen Polung. Es gibt jedoch auch Materialien, insbesondere Aluminium und dessen Legierungen, die sich am Minuspol nur bedingt schweißen lassen. In dem Fall muss entweder am Minuspol mit einem teuren Schutzgas wie beispielsweise Helium oder am Pluspol mit beispielsweise Argon oder einen Helium-Argon Gasgemisch oder mit Wechselstrom (AC-Schweißprozess) geschweißt werden.

In vorteilhafter Weise kann das Abfolgeschema durch eine abwechselnde Abfolge jeweils eines Zündspannungsimpulsen mit der ersten Polarität gefolgt von einem Zündspannungsimpuls mit der zweiten Polarität oder umgekehrt definiert sein. Eine solche Abfolge ist insbesondere dann optimal, wenn eine bevorzugte Zündpolarität nicht bekannt ist.

In einer weiteren vorteilhaften Ausführungsform kann das Abfolgeschema durch eine erste fixe oder variable Anzahl an Zündspannungsimpulsen mit der ersten Polarität gefolgt von einer zweiten fixen oder variablen Anzahl an aufeinanderfolgenden Zündspannungsimpulsen mit der zweiten Polarität oder umgekehrt definiert sein. Dies kann beispielsweise dann vorteilhaft sein, wenn eine bevorzugte Polarität bekannt ist und zuerst mit dieser Polarität ein Zünden versucht werden soll. Erst wenn nach einigen Versuchen die Zündung nicht erfolgt ist, wird auf die andere Polarität gewechselt. Die erste und die zweite Anzahl können gleich sein oder sich unterscheiden. Die so definierte Abfolge wird bis zum Zünden des Lichtbogens oder bis zu einer vorgegebenen maximalen Länge wiederholt.

Bei einem Zünden des Lichtbogens nach einem Zündspannungsimpuls mit der ersten Polarität kann der Lichtbogen vorzugsweise für einen Aufwärmzeitraum bei der ersten Polarität aufrechterhalten werden, wonach ein Umpolen auf die zweite Polarität erfolgt. Durch den Aufwärmzeitraum wird die Stabilität des Lichtbogens erhöht, was das Umpolen erleichtert.

In vorteilhafter Weise kann bei einem Verlöschen des Lichtbogens während des Umpolens die zuvor begonnen Abfolge an Zündspannungsimpulsen gemäß dem Abfolgeschema fortgesetzt werden. Dies kann das Zündverhalten verbessern, wenn zwar der Lichtbogen beim Zündspannungsimpuls mit der ersten Polarität zündet, aber beim Umpolen wieder verlöscht. Alternativ kann die Abfolge an Zündspannungsimpulsen nach dem Verlöschen des Lichtbogens beim Umpolen gemäß demselben oder einem anderen Abfolgeschema neu begonnen werden.

In vorteilhafter Weise kann zumindest eine Kenngröße, welche eine Qualität und/oder ein Zündverhalten des jeweils verwendeten Abfolgeschemas bewertet, ermittelt werden, wobei gegebenenfalls die ermittelte Kenngröße gespeichert und/oder über eine Benutzerschnittstelle bzw. über eine Ein- und Ausgabeeinheit dargestellt wird. Die Kenngröße kann eine beliebige gemessene oder abgeleitete Größe sein, welche eine Beurteilung der Qualität und/oder des Zündverhaltens erlaubt. Die Kenngröße kann beispielsweise eine Anzahl an erfolglosen Zündversuchen auf einem oder auf beiden Polaritäten repräsentieren. Gegebenenfalls kann die Kenngröße eine bestimmte Eigenschaft eines Abfolgeschemas und/oder eines Zündimpulses (insb. dessen Dauer und/oder Spannung), bei der eine Zündung erfolgreich oder unerfolgreich war, repräsentieren. Es können jedoch auch zahlreiche andere Mess- und/oder ermittelbare Werte als Kenngröße verwendet werden.

In einer weiteren vorteilhaften Ausführungsform kann bei Unterschreitung oder Überschreitung oder Erreichen eines zuvor definierten Grenzwerts der Kenngröße automatisch ein alternatives Abfolgeschema ausgewählt werden. Dadurch kann das Verfahren automatisch verbessert werden, falls die Zündung in einem bestimmten Anwendungsfall nicht optimal funktionert.

In vorteilhafter Weise kann das alternative Abfolgeschema entweder zufällig aus mehreren Abfolgeschemen ausgewählt oder mit Hilfe eines gegebenenfalls lernfähigen Algorithmus generiert werden. Der lernfähige Algorithmus kann dabei Verfahren der künstlichen Intelligenz (z.B. unter Verwendung neuronaler Netze) oder eine "klassische" Programmierung, etwa auf Basis von Kennlinien oder Kennfeldern, verwenden. Dadurch lässt sich beispielsweise das Zündverhalten einer individuellen Schweißvorrichtung, die das gegenständliche Verfahren ausführt, automatisch optimal auf die vom Benutzer bevorzugten und/oder benötigten Umgebungs- und Schweißbedingungen anpassen. Gegebenenfalls kann der lernfähige Algorithmus auch jegliche verfügbaren Informationen über Umgebungsbedingungen und/oder Werkstoffparameter und/oder Schweißparameter zur Optimierung des Abfolgeschemas verwenden.

Der Schweißprozess kann ein AC-Schweißprozess sein. Das bedeutet, dass nach dem berührungslosen Zünden des Lichtbogens während des Schweißvorgangs ein Schweißstrom mit wechselnder Polarität fließt.

Der Schweißprozess kann aber auch ein DC-Schweißprozess sein. Das bedeutet, dass nach dem berührungslosen Zünden des Lichtbogens während des Schweißvorgangs ein Schweißstrom mit einer Polarität fließt, wobei der Schweißstrom auch gepulst sein kann.

Ist der Schweißprozess ein AC-Schweißprozess, so kann das berührungslose Zünden des Lichtbogens während des Schweißvorgangs erfolgen. Das bedeutet, dass das berührungslose Zünden bei Wechsel der Polarität, d.h. bei einem Nulldurchgang des Schweißstroms erfolgt, womit ein Abreißen des Lichtbogens verhindert wird.

Das berührungslose Zünden des Lichtbogens kann aber auch zu Beginn des Schweißprozesses erfolgen. Der Schweißvorgang wird somit durch einen Zündvorgang eingeleitet. Dies kann für AC-Schweißprozesse als auch für DC-Schweißprozesse Anwendung finden.

Vorzugsweise werden im Abfolgeschema die Zündspannungsimpulse zumindest zweimal umgepolt. Das bedeutet, dass das Abfolgeschema entweder zumindest einen Zündspannungsimpuls mit einer ersten Polarität, gefolgt von zumindest einem Zündspannungsimpuls mit einer zweiten Polarität, gefolgt von zumindest einem Zündspannungsimpuls mit einer ersten Polarität umfasst oder zumindest einen Zündspannungsimpuls mit einer zweiten Polarität, gefolgt von zumindest einem Zündspannungsimpuls mit einer ersten Polarität, gefolgt von zumindest einem Zündspannungsimpuls mit einer zweiten Polarität umfasst. Vorzugsweise können in diesem Sinn auch mehr als zwei Polaritätsänderungen vorgenommen werden.

In einem weiteren Aspekt betrifft die gegenständliche Offenbarung eine Schweißvorrichtung mit einem Schweißkopf, an dem eine Elektrode vorgesehen ist, wobei die Elektrode mit einer Versorgungseinheit verbunden ist, mit welcher in geregelter Weise eine Spannung zwischen der Elektrode und einer Materialoberfläche eines Werkstücks anlegbar ist. Die Versorgungseinheit ist ausgebildet, zum berührungslosen Zünden eines Lichtbogens zwischen der Elektrode und der Materialoberfläche einen ersten Zündspannungsimpuls mit einer ersten oder zweiten Polarität zu erzeugen und den Lichtbogen nach dem Zünden und gegebenenfalls nach einem Umpolen mit der zweiten Polarität aufrechtzuerhalten, wobei die Versorgungseinheit weiters dazu ausgebildet ist, im Falle eines Zündversagens nach dem ersten Zündspannungsimpuls bis zur erfolgreichen Zündung des Lichtbogens eine Abfolge an Zündspannungsimpulsen gemäß einem Abfolgeschema zu erzeugen, wobei das Abfolgeschema Zündspannungsimpulse mit der ersten Polarität und Zündspannungsimpulse mit der zweiten Polarität umfasst. Die Schweißvorrichtung ist dadurch einfach zu handhaben und stellt bei unterschiedlichen Werkstoffen und Parametern ein zuverlässiges berührungsloses Zünden des Lichtbogens sicher.

In vorteilhafter Weise kann in der Schweißvorrichtung, insbesondere in einer Steuerungs- und/oder Regelungseinheit der Schweißvorrichtung, eine interne Datenbank mit gespeicherten Abfolgeschemen für unterschiedliche Materialien und/oder Oberflächen gespeichert sein.

In vorteilhafter Weise kann die interne Datenbank mit einer externen Datenbank, in der Abfolgeschemen gespeichert sind, zumindest teilweise synchronisierbar sein, wobei die Schweißvorrichtung ausgebildet sein kann, zumindest zeitweise eine Verbindung mit einem externen Speicher und/oder einem Netzwerk und/oder einer Cloud, in denen die externe Datenbank gespeichert ist, aufzubauen. Dadurch lassen sich die mit der Schweißvorrichtung gewonnenen Erkenntnisse und entwickelten Verbesserungen auch für andere, gleichartige Schweißvorrichtungen nutzen und umgekehrt.

In einer weiteren vorteilhaften Ausführungsform kann zumindest ein gespeichertes Abfolgeschema vom Anwender über eine Ein- oder Ausgabeeinheit programmierbar sein. Dies erlaubt insbesondere sehr erfahrenen und geschulten Benutzern eine spezifische Anpassung der Schweißvorrichtung an ihre eigenen Bedingungen.

In vorteilhafter Weise kann ein aktuell ausgewähltes Abfolgeschema über eine Benutzerschnittstelle bzw. über eine Ein- und Ausgabeeinheit darstellbar sein. Die Darstellung kann beispielsweise anhand einer Bezeichnung des Abfolgeschemas oder mithilfe eines Piktogramms oder einer diagrammhaften Darstellung erfolgen. Dies erleichtert dem Benutzer das Erkennen des gewählten Abfolgeschemas und das Wiedererkennen eines zuvor erfolgreich eingesetzten Abfolgeschemas.

In vorteilhafter Weise kann zumindest eine Kenngröße, welche eine Qualität und/oder ein Zündverhalten des jeweils verwendeten Abfolgeschemas bewertet, ermittelbar sein, wobei die ermittelte Kenngröße gegebenenfalls gespeichert und/oder über eine Benutzerschnittstelle bzw. über eine Ein- und Ausgabeeinheit darstellbar sein kann. Diese Ermittlung und Verwaltung der Kenngröße(n) erleichtert die Implementierung von Qualitätssicherungs- und -steigerungsmechanismen. Gegebenenfalls können die Kenngrößen über die Synchronisierung mit anderen Erfahrungswerten abgeglichen und gegebenenfalls an den Hersteller übermittelt werden, was zur Umsetzung gezielter Produktverbesserungen genutzt werden kann.

In einer weiteren bevorzugten Ausführungsform kann die Schweißvorrichtung ausgebildet sein, einen lernfähigen Algorithmus anzuwenden und ein für eine optimale Zündung geeignetes Abfolgeschema automatisch auszuwählen und anzupassen. Dadurch "lernt" die Schweißvorrichtung auf Basis der im Einsatz gemachten "Erfahrungen" und Erkenntnisse.

Durch den lernfähigen Algorithmus können Fehlerquellen erkannt und deren Lösungsansätze automatisiert umgesetzt werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig. 1 eine blockhafte schematische Darstellung einer Schweißvorrichtung,
Fig. 2 ein Diagramm beispielhafter Spannungs- und Stromverläufe bei Zünden eines Lichtbogens am Minuspol,
Fig. 3 ein Diagramm beispielhafter Spannungs- und Stromverläufe bei Zünden eines Lichtbogens am Pluspol,
Fig. 4 ein Diagramm beispielhafter Spannungs- und Stromverläufe beim Zünden eines Lichtbogens mit einer Abfolge an Zündspannungsimpulsen beginnend mit einem negativen Impuls und
Fig. 5 bis Fig. 7 Diagramme von Abfolgen an Zündspannungsimpulsen gemäß unterschiedlicher Abfolgeschemata.

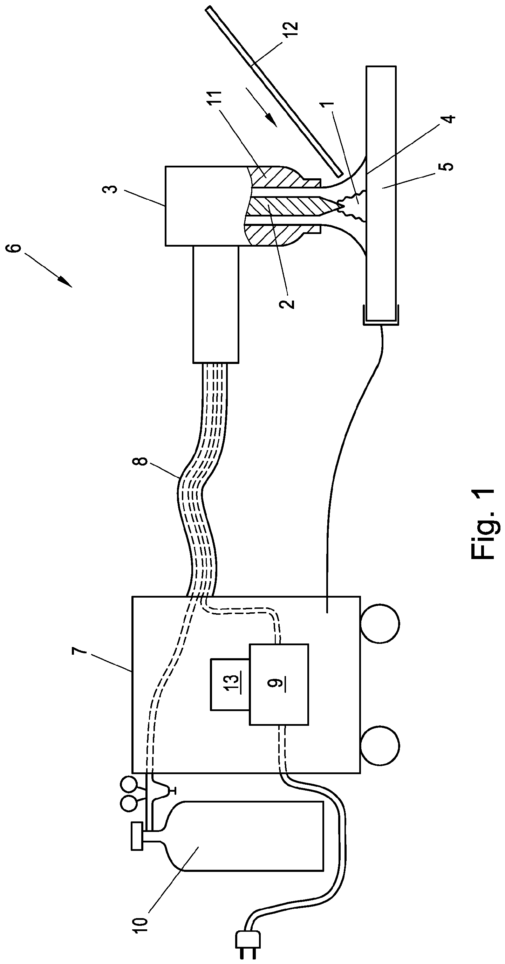

Fig. 1 zeigt in schematischer Darstellung eine Schweißvorrichtung 6 mit einer Versorgungseinheit 7 und einem Schweißkopf 3, der über ein Schlauchpaket 8 mit der Versorgungseinheit 7 verbunden ist. Die Versorgungseinheit 7 weist in an sich bekannter Weise zumindest eine Schweißstromquelle 9 und zumindest eine Schutzgasquelle 10 auf.

Der Schweißkopf 3 weist eine nicht abschmelzende Elektrode 2 und eine Schutzgasdüse 11 auf. Zwischen der Elektrode 2 und einem Werkstück 5 brennt während des Schweißens ein Lichtbogen 1, welcher von der Schweißstromquelle 9 gezündet, geregelt und gemäß einem eingestellten Schweißschema aufrechterhalten wird. Zur Steuerung und Regelung kann die Schweißstromquelle 9 mit einer Steuerungs- und/oder Regelungseinheit 13 in Verbindung stehen. Über die Schutzgasdüse 11 strömt während des Schweißens das Schutzgas, welches den Lichtbogen umgibt und das vom Lichtbogen erzeugte Schweißbad gegen unerwünschte Einflüsse der Umgebungsluft schützt. Als Schutzgase können beispielsweise Argon, Helium und Gemische daraus, sowie Argon mit geringen Anteilen von Stickstoff und Sauerstoff verwendet werden. Ferner können ebenso reaktionsträge, reduzierende und oxidierende Gasgemische verwendet werden. Beispielsweise kann der Anteil von Wasserstoff in einem Gasgemisch bis zu 5 Vol. % betragen. Gegebenenfalls kann der Schweißkopf 3 auch komplexer aufgebaut sein. Beispielsweise kann der Schweißkopf 3 als Plasmaschweißkopf ausgebildet sein, der eine üblicherweise gekühlte Plasmadüse zur Einschnürung des Lichtbogens aufweisen kann. Gegebenenfalls kann auch die Schutzgaszufuhr und/oder die Schutzgaszusammensetzung über die Steuerungs- und/oder Regelungseinheit 13 geregelt bzw. gesteuert werden.

Während des Schweißens wird von Hand oder über eine automatisierte Zuführung ein Schweißzusatz 12 in den vom Lichtbogen erwärmten Bereich vorgeschoben, wobei der Schweißzusatz 12 abschmilzt und zusammen mit dem aufgeschmolzenen Material des Werkstücks 5 das Schmelzbad ausbildet, welches beim Erhärten die Schweißnaht bildet. Der Schweißkopf 3 kann entweder von Hand oder automatisch, beispielsweise mittels eines Schweißroboters, geführt werden. Auch der Schweißzusatz kann entweder von Hand hinzugefügt werden, oder mithilfe einer automatischen Schweißdrahtzuführung, deren Vorschubgeschwindigkeit auf die Bewegung des Schweißkopfes 3 abgestimmt ist.

Vor jedem Schweißvorgang muss der Lichtbogen 1 berührungslos gezündet werden, da die nicht abschmelzende Elektrode nicht mit der Werkstückoberfläche in Kontakt gelangen soll. Würde die nicht abschmelzende Elektrode, wobei es sich in der Regel um eine reine Wolframelektrode oder eine mit oxidischen Zusätzen versehene Wolframelektrode handelt, mit der Werkstoffoberfläche in Kontakt kommen, so würden sich Wolframeinschlüsse oder Wolfram rückstände in der Werkstoffoberfläche bzw. in der Schweißnaht wiederfinden. Die Zündung erfolgt üblicherweise mithilfe von Zündspannungsimpulsen, die von der Schweißstromquelle 9 zwischen der Elektrode 2 und dem Werkstück 5 angelegt werden. Das berührungslose Zünden des Lichtbogens 1 wird hierin weiter unten noch eingehend beschrieben.

Sobald der Lichtbogen 1 stabil brennt, (was von der Schweißstromquelle 9 durch einen Anstieg des Schweißstroms erkannt wird), wird der Lichtbogen 1 gemäß einem gewählten Schweißschema aufrechterhalten, wobei das Schweißschema beispielsweise die Verwendung eines Lichtbogens mit konstantem Strom oder konstanter Leistung sowie eines Impulslichtbogens (beides stellen DC-Schweißprozesse dar) oder Wechselstromlichtbogens (AC-Schweißprozess) vorgeben kann.

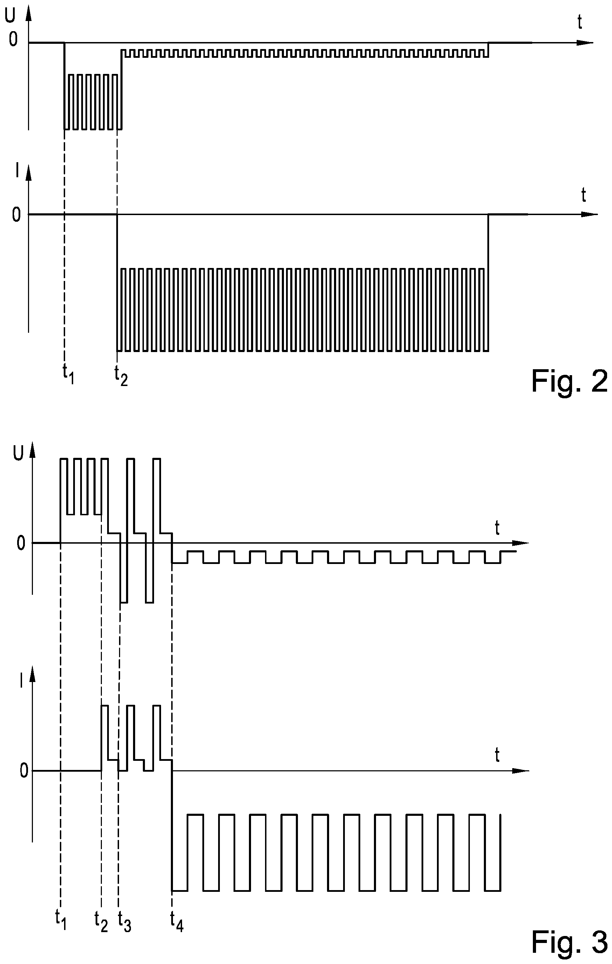

Fig. 2 bis 4 zeigen jeweils Diagramme, bei denen der Verlauf des Schweißspannung U und des Schweißstroms I vor, während und nach der Zündung des Lichtbogens gegenübergestellt sind.

Fig. 2 zeigt ein Zünden des Lichtbogens am Minuspol. Zum Zeitpunkt t1 beginnt der Zündvorgang, wobei zum Zünden des Lichtbogens eine Abfolge an negativen Zündspannungsimpulsen zwischen die Elektrode 2 und dem Werkstück 5 aufgebracht wird. Diese Art der Zündung mit negativen Zündspannungsimpulsen an der Elektrode wird auch als "Minuszündung" bezeichnet. Der Zündvorgang kann beispielsweise durch Drücken einer Brennertaste (bei manuellem Schweißen) oder durch eine Maschinensteuerung (bei maschinellem Schweißen) ausgelöst werden. Im beispielhaft dargestellten Fall zündet der Lichtbogen erst mit einer erheblichen Verzögerung, nämlich mit dem siebenten Zündspannungsimpuls (Zeitpunkt t2). Wenn beispielsweise Zündspannungsimpulse eine Länge von jeweils 5 ms aufweisen und mit einer Frequenz von 100 Zündspannungsimpulsen pro Sekunde aufgebracht werden, entspricht dies in Fig. 2 einer Zündverzögerung von 70 ms. Eine solche Zündverzögerung kann zwar vom Benutzer bereits wahrgenommen werden, wird aber im Allgemein noch nicht als störend empfunden. Dennoch ist die Zündverzögerung ein Indiz dafür, dass das Zündverfahren für die gegebene Schweißaufgabe nicht optimal ist.

Beim siebenten Zündspannungsimpuls bildet sich zum Zeitpunkt t2 in dem durch die Zündspannungsimpulse zwischen der Elektrode 2 und dem Werkstück 5 erzeugen ionisierten Bereich der für den Schweißprozess typische Lichtbogen 1 aus, was im Stromverlauf durch einen starken (negativen) Anstieg des Schweißstroms I erkennbar ist.

Die Schweißstromquelle 9 erkennt anhand des Schweißstromverlaufs das Zünden des Lichtbogens und erzeugt keine weiteren Zündspannungsimpulse, sondern regelt den weiteren Schweißprozess gemäß dem gewählten Schweißschema, also beispielsweise mit einem konstanten Schweißstrom oder einer konstanten Leistung oder, wie im dargestellten Fall, mit einem veränderlichen Schweißstrom, der in Form von Schweißimpulsen aufgebracht wird, wobei ein Impulslichtbogen erzeugt wird. Gegebenenfalls kann das Schweißschema auch mit Wechselstrom (AC-Schweißprozess) fortgeführt werden, wie dies etwa bei Schweißen von Aluminium und dessen Legierungen oder auch von Magnesium und dessen Legierungen vorteilhaft sein kann. Eine typisch eingestellte Wechselstrom-Frequenz für das WIG-Schweißen von Aluminium, Magnesium und deren Legierungen beträgt 100 Hz.

Beim Zünden des Lichtbogens am negativen Pol (also bei einer Minuszündung) wandern die Elektronen von der Elektrode 2 in das Werkstück, sodass die Wärme hauptsächlich im Werkstück erzeugt wird, was zur Bildung des Schweißbades auch erwünscht ist. Die Elektrode 2 erwärmt sich weniger stark und wird dadurch vor übermäßiger Abnutzung geschützt. Nachteilig ist bei der Minuszündung, dass der Lichtbogen am Schweißbeginn oft noch nicht sehr stabil brennt und dass es bei bestimmten Schweißmaterialien zu merkbaren Zündverzögerungen kommen kann. Eine Zündverzögerung von mehr als einer halben Sekunde wird von den meisten Benutzern bereits als störend empfunden. Gegebenenfalls kann es auch zu vollständigen Zündaussetzern kommen, wobei dann der Lichtbogen in einer Zündspannungsimpuls-Abfolge vorgegebener Länge gar nicht zündet. Die Länge der Abfolge an Zündspannungsimpulsen kann beispielsweise durch Sicherheitsvorschriften und Normen oder durch die Kapazitäten der Schweißstromquelle 9 betriebsbedingt vorgegeben sein.

Um die Zuverlässigkeit der Zündung und die Stabilität des Lichtbogens nach dem Zünden zu erhöhen, wurde ein alternatives Zündverfahren entwickelt, bei dem die Zündung am Pluspol erfolgt. Da der Schweißvorgang selbst meist mit negativer Polung ausgeführt wird, muss der Lichtbogen für das Schweißen üblicherweise noch auf den Minuspol umgepolt werden, sobald er stabil brennt. Fig. 3 zeigt einen bespielhaften Verlauf der Schweißspannung U und des Schweißstroms I bei solch einem Zündverfahren am Pluspol, das auch als "Reversed Polarity Ignition" (RPI-Zündung) bezeichnet wird. Bei der Zündung am Pluspol wird die Werkstückoberfläche durch die austretenden Elektroden gewissermaßen "gereinigt", indem etwa Oxidablagerungen aus der Oberfläche herausgerissen werden. Bei der Zündung am Pluspol steigt die Temperatur an der Wolframelektrode, dies erleichtert das Zünden des Lichtbogens.

Das in Fig. 3 dargestellte Zündverfahren beginnt zum Zeitpunkt t1 mit einer Abfolge positiver Zündspannungsimpulse, wobei mit dem vierten Zündspannungsimpuls (zum Zeitpunkt t2) ein Lichtbogen zündet, was durch den Anstieg des (positiven) Schweißstroms erkennbar ist. Nach dem Zünden des Lichtbogens werden die Schweißspannung und der Schweißstrom für einen kurzen Aufwärmzeitraum (beispielsweise etwa 10 bis 20 ms) mit positiver Polung aufrechterhalten wonach ein Umpolen auf den negativen Pol erfolgt. In Fig. 3 erstreckt sich der Aufwärmzeitraum vom Ende des Zündspannungsimpulses bis zum Zeitpunkt t3. Dabei kann es vorkommen, dass der Lichtbogen beim Umpolen wieder verlöscht, was in Fig. 3 zum Zeitpunkt t3 der Fall ist. Daher folgt nochmals ein positiver Zündspannungsimpuls, der einen Lichtbogen zündet, dieser wird nochmals für einen Aufwärmzeitraum am Pluspol aufrechterhalten und dann wieder auf den negativen Pol umgepolt, wobei er im dargestellten Beispiel abermals verlöscht. Erst nach der dritten Zündung des Lichtbogens am Pluspol und einem weiteren Aufwärmzeitraum gelingt zum Zeitpunkt t4 das Umpolen auf den Minuspol und das eigentliche Schweißverfahren kann gemäß einem gewählten Schweißschema erfolgen. In Fig. 3 ist das Schweißschema als Impulsschweißverfahren dargestellt, es kann jedoch auch ein Schweißen mit konstantem Gleichstrom oder mit konstanter Leistung oder mit Wechselstrom (AC-Schweißprozess) erfolgen.

Wird mit der Wolframelektrode auf dem Pluspol gezündet, kann dies die Zuverlässigkeit der Zündung und die Lichtbogenstabilität beim Schweißstart verbessern. Allerdings kann es sein, dass sich der Lichtbogen nicht umpolen lässt und dabei wieder verlöscht. Da bei der Zündung am Pluspol die Elektronen vom Werkstück zur Elektrode wandern, erwärmt sich die Elektrodenspitzt stark, was deren Abnutzung beschleunigt. Wenn sich der Lichtbogen nicht umpolen lässt, wird dennoch die Elektrodenspitze durch die zündenden positiven Lichtbögen stark beansprucht.

Insbesondere bei glatten, polierten Oberflächen kann die Zündung am Pluspol erschwert werden. Beispielsweise können etwa beim Schweißen von Hoch- und Niedriglegierten Stählen, sowie Nichteisenmetallen oder bei Wiederzündungen am selben Schweißpunkt bzw. bei überlappenden Schweißpunkten am Pluspol Zündaussetzer auftreten, da die dabei auftretenden sehr glatten Werkstückoberflächen das Zündverhalten am Pluspol verschlechtern. Die optimale Auswahl des Zündverfahrens hängt dabei von zahlreichen Werkstoffeigenschaften und Parametern ab, wie etwa der Oberflächenrauigkeit, der chemischen Zusammensetzung des Materials, der Kristallographie und der Korngröße und - verteilung, Beschichtung, etc. Ist die richtige Auswahl schon kompliziert genug, so kann es in manchen Fällen auch dazu kommen, dass sich die Umstände während des Schweißens ändern, etwa dass ein zuvor gewähltes und optimal funktionierendes Zündverfahren plötzlich nicht mehr funktioniert, etwa wenn eine Schweißung an einer zuvor angefertigten Naht fortgesetzt werden soll.

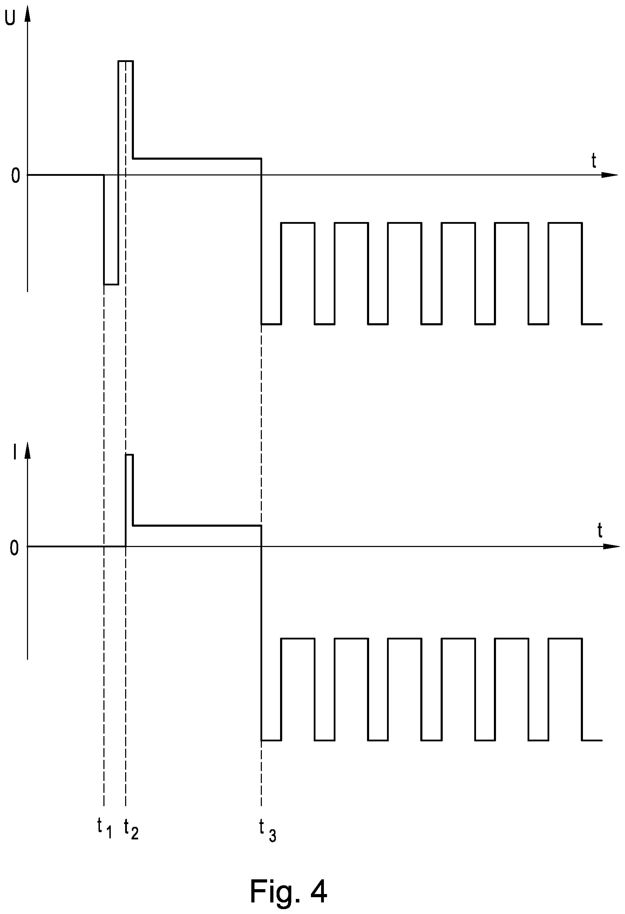

In Fig. 4 ist der Verlauf der Schweißspannung U und der Schweißstroms I während eines vorteilhaften Zündverfahrens dargestellt, das unabhängig von den jeweiligen Werkstoffeigenschaften und Parametern immer eine optimale Zündzuverlässigkeit sicherstellt. Dabei wird bis zur Zündung des Lichtbogens eine Abfolge an Zündspannungsimpulsen erzeugt, welche Zündspannungsimpulse mit der ersten Polarität und Zündspannungsimpulse mit der zweiten Polarität umfasst. Im dargestellten Fall wird zuerst, bei Zeitpunkt t1, ein erster, negativer Zündspannungsimpuls aufgebracht. Wenn dabei sofort ein Lichtbogen zündet, wird das Verfahren in der in Fig. 2 dargestellten Weise fortgeführt. Wenn, wie im dargestellten Fall, der erste Zündspannungsimpuls keinen Lichtbogen bewirkt, folgt unmittelbar auf den ersten Zündspannungsimpuls (gegebenenfalls mit einer vorgegebenen Verzögerung) ein zweiter Zündspannungsimpuls mit umgekehrter, positiver Polarität, bei dem zum Zeitpunkt t2 ein Lichtbogen zündet. Der Lichtbogen wird dann wiederum über einen Aufwärmzeitraum aufrechterhalten und zum Zeitpunkt t3 umgepolt. Danach folgt wiederum das herkömmliche Schweißverfahren gemäß dem gewählten Schweißschema.

In Fig. 4 zündet der Lichtbogen bereits beim zweiten Zündspannungsimpuls. Es kann jedoch auch länger dauern, bis die Zündung erfolgt. In dem Fall wird das Zündverfahren durch die zuvor definierte Abfolge an positiven und negativen Zündspannungsimpulsen so lange fortgesetzt, bis eine erfolgreiche Zündung bewirkt wird. Die Abfolge entspricht dabei einem definierten Abfolgeschema, welches die positiven und negativen Zündspannungsimpulse definiert.

Nach dem Zeitpunkt t3 zeigt Fig. 4 eine Abfolge von Schweißspannungsimpulsen (Fig. 4 oben) und Schweißstromimpulsen (Fig. 4 unten) im Schweißbetrieb, nachdem zum Zeitpunkt t2 eine erfolgreiche Zündung des Lichtbogens stattgefunden hat. Beispielhafterweise ist dabei ein Impulsschweißverfahren (gepulster DC-Schweißprozess) dargestellt, umfassend eine Abfolge von Schweißspannungs- und Schweißstromimpulsen. Im gezeigten Impulsschweißverfahren sind Schweißspannungsimpulse (Fig. 4 oben) und Schweißstromimpulse (Fig. 4 unten) vorgesehen, welche von Schweißzwischenphasen unterbrochen sind. In den Schweißzwischenphasen sind Schweißspannung/Schweißstrom auf eine/n betragsmäßig geringere/n Grundschweißspannung/Grundschweißstrom reduziert.

Die Grundschweißspannung/der Grundschweißstrom kann in den Schweißzwischenphasen auch null sein. Die Schweißspannungsimpulse (Fig. 4 oben) und Schweißstromimpulse (Fig. 4 unten) können mit einer Frequenz im Bereich von 0,1 Hz bis 10 kHz auftreten.

Obwohl in Fig. 4 ein gepulster DC-Schweißprozess dargestellt ist, kann ab dem Zeitpunkt t3 auch ein Konstantstrom-Schweißprozess (ungepulster DC-Schweißprozess), ein AC-Schweißprozess oder aber auch eine Kombination aus AC- Schweißprozess und DC-Schweißprozess, ein sogenannter AC-DC-Mix-Schweißprozess, erfolgen.

Ein AC-DC-Mix-Schweißprozess umfasst Schweißphasen, in denen ein, vorzugsweise gepulster, DC- Schweißprozess durchgeführt wird und Schweißphasen, in denen ein AC-Schweißprozess durchgeführt wird. Ein AC-DC-Mix-Schweißprozess kann demnach bedeuten, dass während des Schweißprozesses eine Mehrzahl an Schweißspannungsimpulsen mit einer ersten Polarität auftreten (z.B. gepulster DC-Schweißprozessanteil mit einer ersten Polarität), woraufhin eine Umpolung der Schweißspannung auf eine andere zweite Polarität erfolgt (AC-Schweißprozessanteil) und wiederum eine Mehrzahl an Schweißspannungsimpulsen mit dieser anderen zweiten Polarität auftreten (gepulster DC-Schweißprozessanteil mit einer zweiten Polarität), daraufhin wieder eine Umpolung der Schweißspannung erfolgt etc.

Ein AC-DC-Mix-Schweißprozess kann aber auch bedeuten, dass nach einem Auftreten einer Mehrzahl an Schweißspannungsimpulsen mit einer ersten Polarität (z.B. gepulster DC-Schweißprozessanteil mit einer ersten Polarität) eine mehrfache Umpolung der Schweißspannung erfolgt, zunächst auf eine zweite Polarität, danach zurück auf die erste Polarität, danach gegebenenfalls wieder zurück auf die zweite Polarität usw. (AC-Schweißprozessanteil), und erst nach einer mehrfachen Umpolung der Polarität erneut eine Mehrzahl von Schweißspannungsimpulsen gleicher Polarität mit der dann gegebenen Polarität erfolgt (z.B. gepulster DC-Schweißprozessanteil). Die Auswahl der Art des Schweißprozesses kann dabei je nach zu erledigender Schweißaufgabe erfolgen.

Wenn bei diesem Verfahren ein am positiven Pol gezündeter Lichtbogen während des Umpolens wieder erlischt, kann entweder die bereits begonnene, definierte Abfolge an Zündspannungsimpulsen mit dem im Abfolgeschema als nächstes vorgesehenen Zündspannungsimpuls fortgesetzt werden, oder die Abfolge kann nach demselben oder einem geänderten Abfolgeschema neu begonnen werden.

Als "Abfolgeschema" wird im Zusammenhang mit der gegenständlichen Offenbarung die Definition zumindest der Polaritäten der in einer Abfolge aufeinanderfolgenden Zündspannungsimpulse bezeichnet. Gegebenenfalls kann das Abfolgeschema auch andere Parameter definieren, wobei die anderen Parameter beispielsweise ausgewählt sein können aus Amplituden von Zündspannungsimpulsen, Abständen zwischen jeweils zwei Zündspannungsimpulsen und einer maximalen Länge der Abfolge.

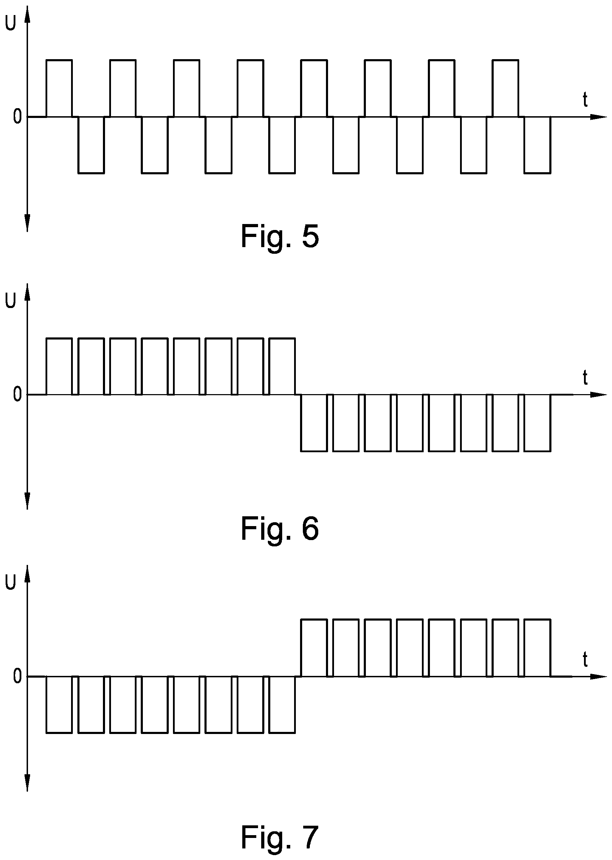

In Fig. 5 bis 7 sind unterschiedliche beispielhafte Abfolgeschemata beispielhaft dargestellt.

Fig. 5 zeigt eine Abfolge an Zündspannungsimpulsen, bei der beginnend mit einem positiven Zündspannungsimpuls jeweils abwechselnd ein positiver gefolgt von einem negativen Zündspannungsimpuls ausgeführt werden. In analoger Weise kann das in Fig. 5 dargestellte Abfolgeschema auch mit einem negativen Zündspannungsimpuls beginnen.

Zwischen zwei aufeinanderfolgenden Zündspannungsimpulsen unterschiedlicher Polarität zeigt Fig. 5 je eine Zündpause. Unter Zündpause sind dabei jene zeitlichen Intervalle zu verstehen, in denen die Zündspannung während des Wechsels von einem Zündspannungsimpuls einer ersten Polarität zu einem Zündspannungsimpuls einer zweiten Polarität (oder umgekehrt) bei Null liegt. Wie erwähnt können (bei einem Nulldurchgang auftretende) Zündpausen genutzt werden, um zu überprüfen, ob bereits eine Zündung eines Lichtbogens stattgefunden hat. Derartige Zündpausen sind vorteilhafterweise kurz zu halten. Typischerweise weisen derartige Zündpausen eine Dauer zwischen 50 µs und 0,1 µs auf, bevorzugt liegt die Dauer für eine Zündpause zwischen 20 µs und 0,2 µs, besonders bevorzugt zwischen 10 µs und 0,5 µs.

Da die Zündpausen wie erwähnt sehr kurz sein können, ist in Fig. 4 beim Übergang des zunächst negativen Zündspannungsimpulses ab dem Zeitpunkt t1 auf den dann positiven Zündspannungsimpuls zeichnerisch keine Zündpause dargestellt. Die zeichnerisch nicht dargestellte Zündpause tritt in Fig. 4 zwischen den Zeitpunkten t1 und t2 auf. Die in Fig. 4 ab dem Zeitpunkt t3 gezeigten Schweißphasen, wo während des Schweißbetriebs Schweißspannung/Schweißstrom auf eine/n betragsmäßig geringere/n Grundschweißspannung/Grundschweißstrom reduziert werden, sind demgegenüber wie erwähnt als Schweißzwischenphasen zu verstehen und demnach klar von Zündpausen abzugrenzen.

Wie erwähnt können (bei einem Nulldurchgang auftretende) Zündpausen genutzt werden, um zu überprüfen, ob bereits eine Zündung eines Lichtbogens stattgefunden hat.

Fig. 6 zeigt ein weiteres vorteilhaftes Abfolgeschema, wobei jeweils eine fixe Anzahl an positiven, mittels Zündzwischenphasen beabstandeten, Zündspannungsimpulsen gefolgt von einer fixen Anzahl an negativen, mittels Zündzwischenphasen beabstandeten, Zündspannungsimpulsen ausgeführt wird. Da innerhalb einer Anzahl von positiven Zündspannungsimpulsen bzw. innerhalb einer Anzahl von negativen Zündspannungsimpulsen keine Polaritätswechsel stattfinden, stellen die als Zündzwischenphasen bezeichneten Abstände zwischen Zündspannungsimpulsen nur einer Polarität keine Zündpausen im Sinn der gegenständlichen Erfindung dar.

Im in Fig. 6 dargestellten Fall erfolgen acht positive, jeweils mittels Zündzwischenphasen beabstandete, Zündspannungsimpulse gefolgt von acht negativen, jeweils mittels Zündzwischenphasen beabstandeten, Zündspannungsimpulsen, wobei diese Abfolge gegebenenfalls bis zum Erreichen einer maximalen Länge wiederholt werden kann. Fig. 6 zeigt auch eine erfindungsgemäße Zündpause zwischen zwei benachbarten Zündspannungsimpulsen unterschiedlicher Polarität (Mitte des Diagramms).

Fig. 7 zeigt ein analoges Abfolgeschema, das sich lediglich hinsichtlich der Polung unterscheidet und mit acht, mittels Zündzwischenphasen beabstandeten, negativen Zündspannungsimpulsen beginnt, gefolgt von acht positiven, mittels Zündzwischenphasen beabstandeten, Zündspannungsimpulsen. Analog zu Fig. 6 zeigt auch Fig. 7 eine erfindungsgemäße Zündpause zwischen zwei benachbarten Zündspannungsimpulsen unterscheidender Polarität, wobei der Polaritätswechsel im Vergleich zu Fig. 6 hier in entgegengesetzter Richtung erfolgt.

Die Zündzwischenphasen zwischen den positiven Zündspannungsimpulsen können gleicher oder unterschiedlicher Länge wie die Zündzwischenphasen zwischen den negativen Zündspannungsimpulsen sein. Derartige Zündzwischenphasen können unterschiedlichste Zeitdauern aufweisen, und beispielsweise eine relativ lange Zeitdauer zwischen 50 ms und 5 ms, eine relativ kurze Zeitdauer zwischen 5 ms und 50 µs oder eine sehr kurze Zeitdauer zwischen 50 µs und 0,1 µs dauern. Bei der Wahl dieser Zeitdauern können neben Bedingungen für die Zündung des Lichtbogens auch nationale oder internationale Normen und Vorschriften berücksichtigt werden.

Die Anzahl der im Abfolgeschema jeweils aufeinanderfolgenden Zündspannungsimpulse gleicher Polarität kann auch höher oder niedriger sein als in Fig. 6 oder 7 dargestellt. Gegebenenfalls kann sich die Anzahl der jeweils aufeinanderfolgenden Zündspannungsimpulse gleicher Polarität innerhalb eines Abfolgeschemas auch ändern oder es können sich die Anzahl der aufeinanderfolgenden Zündspannungsimpulse mit positiver Polarität und der mit negativer Polarität voneinander unterscheiden. Gegebenenfalls können sich die Gesamtanzahl der Zündspannungsimpulse mit positiver Polarität von der Gesamtanzahl der Zündspannungsimpulse mit negativer Polarität voneinander unterscheiden oder sie können identisch sein.

Die einzelnen Zündspannungsimpulse weisen in den in Fig. 5 bis 7 dargestellten Fällen jeweils dieselbe (positive oder negative) Amplitude und dieselbe Dauer auf, und der zeitliche Abstand zwischen jeweils zwei aufeinanderfolgenden Zündspannungsimpulsen ist jeweils identisch. Es ist jedoch auch möglich, Abfolgeschemata zu definieren, bei denen sich die nacheinander ausgeführten Zündspannungsimpulse in einer definierten Weise auch hinsichtlich dieser Parameter unterscheiden können. Der Durchschnittsfachmann ist bei Kenntnis der hierin offenbarten Lehren von sich aus in der Lage, geeignete Abfolgeschemata durch routinemäßige Arbeiten und Versuche sinnvoll auszuwählen und dabei die erwähnten Nebenbedingungen zu berücksichtigen.

In allen Fällen werden die Zündspannungsimpulse gemäß dem entsprechenden Abfolgeschema solange ausgeführt, bis entweder ein Lichtbogen zündet oder eine für das Abfolgeschema definierte Maximaldauer oder maximale Zündspannungsimpulsanzahl erreicht ist und das Verfahren ohne Zündung abbricht.

Die in den einzelnen Ausgestaltungen und Beispielen angegebenen einzelnen Merkmale und Varianten können (sofern nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

### Bezugszeichen:

Lichtbogen 1
Elektrode 2
Schweißkopf 3
Materialoberfläche 4
Werkstück 5
Schweißvorrichtung 6
Versorgungseinheit 7
Schlauchpaket 8
Schweißstromquelle 9
Schutzgasquelle 10
Schutzgasdüse 11
Schweißzusatz 12
Steuerungs- und/oder Regelungseinheit 13

## Patentansprüche

1. Verfahren zum berührungslosen Zünden eines Lichtbogens (1) zwischen einer Elektrode (2) eines Schweißkopfes (3) und einer Materialoberfläche (4) eines Werkstücks (5) für einen Schweißprozess, **dadurch gekennzeichnet, dass** zwischen der Elektrode (2) und der Materialoberfläche (4) ein erster Zündspannungsimpuls mit einer ersten oder zweiten Polarität erzeugt wird, wobei der Lichtbogen (1) nach dem Zünden, und gegebenenfalls nach einem Umpolen, mit der zweiten Polarität oder mit einer wechselnden Polarität aufrechterhalten wird, wobei im Falle eines Zündversagens nach dem ersten Zündspannungsimpuls bis zur erfolgreichen Zündung des Lichtbogens (1) eine Abfolge an Zündspannungsimpulsen gemäß einem Abfolgeschema erzeugt wird, wobei das Abfolgeschema eine Anzahl an Zündspannungsimpulsen mit der ersten Polarität und eine Anzahl an Zündspannungsimpulsen mit der zweiten Polarität umfasst und wobei zwischen Zündspannungsimpulsen mit der ersten Polarität und Zündspannungsimpulsen mit der zweiten Polarität eine Zündpause vorgesehen wird.

2. Verfahren nach Anspruch 1, **dadurch gekennzeichnet, dass** das Abfolgeschema durch eine abwechselnde Abfolge jeweils eines Zündspannungsimpulses mit der ersten Polarität gefolgt von einem Zündspannungsimpuls mit der zweiten Polarität oder umgekehrt definiert ist, oder dass das Abfolgeschema durch eine erste fixe oder variable Anzahl an Zündspannungsimpulsen mit der ersten Polarität gefolgt von einer zweiten fixen oder variablen Anzahl an aufeinanderfolgenden Zündspannungsimpulsen mit der zweiten Polarität oder umgekehrt definiert ist.

3. Verfahren nach einem der Ansprüche 1 bis 2, **dadurch gekennzeichnet, dass** bei einem Zünden des Lichtbogens (1) nach einem Zündspannungsimpuls mit der ersten Polarität der Lichtbogen für einen Aufwärmzeitraum bei der ersten Polarität aufrechterhalten wird, wonach ein Umpolen auf die zweite Polarität erfolgt.

4. Verfahren nach Anspruch 3, **dadurch gekennzeichnet, dass** bei einem Verlöschen des Lichtbogens während des Umpolens die zuvor begonnen Abfolge an Zündspannungsimpulsen gemäß dem Abfolgeschema fortgesetzt wird.

5. Verfahren nach einem der Ansprüche 1 bis 4, **dadurch gekennzeichnet, dass** zumindest eine Kenngröße, welche eine Qualität und/oder ein Zündverhalten des jeweils verwendeten Abfolgeschemas bewertet, ermittelt wird, wobei gegebenenfalls die ermittelte Kenngröße gespeichert und/oder über eine Benutzerschnittstelle bzw. über eine Ein- und Ausgabeeinheit dargestellt wird.

6. Verfahren nach Anspruch 5, **dadurch gekennzeichnet, dass** bei Unterschreitung oder Überschreitung oder Erreichen eines zuvor definierten Grenzwerts der Kenngröße automatisch ein alternatives Abfolgeschema ausgewählt wird.

7. Verfahren nach Anspruch 6, **dadurch gekennzeichnet, dass** das alternative Abfolgeschema entweder zufällig aus mehreren Abfolgeschemen ausgewählt oder mit Hilfe eines gegebenenfalls lernfähigen Algorithmus generiert wird.

8. Verfahren nach einem der Ansprüche 1 bis 7, **dadurch gekennzeichnet, dass** der Schweißprozess ein DC-Schweißprozess ist, bei welchem das berührungslose Zünden des Lichtbogens während des Schweißprozesses erfolgt, **oder dass** der Schweißprozess ein AC-Schweißprozess oder ein DC-Schweißprozess ist, bei welchem das berührungslose Zünden zu Beginn des Schweißprozesses erfolgt.

9. Verfahren nach einem der Ansprüche 1 bis 8, **dadurch gekennzeichnet, dass** im Abfolgeschema die Zündspannungsimpulse zumindest zweimal umgepolt werden.

10. Schweißvorrichtung (6) mit einem Schweißkopf (3), an dem eine Elektrode (2) vorgesehen ist, wobei die Elektrode (2) mit einer Versorgungseinheit (7) verbunden ist, mit welcher in geregelter Weise eine Spannung (U) zwischen der Elektrode (2) und einer Materialoberfläche (4) eines Werkstücks (5) anlegbar ist, **dadurch gekennzeichnet, dass** die Versorgungseinheit (7) ausgebildet ist, zum berührungslosen Zünden eines Lichtbogens (1) zwischen der Elektrode (2) und der Materialoberfläche (4) einen ersten Zündspannungsimpuls mit einer ersten oder zweiten Polarität zu erzeugen und den Lichtbogen (1) nach dem Zünden, und gegebenenfalls nach einem Umpolen, mit der zweiten Polarität aufrechtzuerhalten, wobei die Versorgungseinheit (7) weiters dazu ausgebildet ist, im Falle eines Zündversagens nach dem ersten Zündspannungsimpuls bis zur erfolgreichen Zündung des Lichtbogens (1) eine Abfolge an Zündspannungsimpulsen gemäß einem Abfolgeschema zu erzeugen, wobei das Abfolgeschema eine Anzahl an Zündspannungsimpulsen mit der ersten Polarität und eine Anzahl an Zündspannungsimpulsen mit der zweiten Polarität umfasst und wobei zwischen Zündspannungsimpulsen mit der ersten Polarität und Zündspannungsimpulsen mit der zweiten Polarität eine Zündpause vorgesehen ist.

11. Schweißvorrichtung nach Anspruch 10, **dadurch gekennzeichnet, dass** eine interne Datenbank mit gespeicherten Abfolgeschemen für unterschiedliche Materialien und/oder Oberflächen in der Schweißvorrichtung, insbesondere in einer Steuerungs- und/oder Regelungseinheit (13) der Schweißvorrichtung, gespeichert ist.

12. Schweißvorrichtung nach Anspruch 11, **dadurch gekennzeichnet, dass** die interne Datenbank mit einer externen Datenbank, in der Abfolgeschemen gespeichert sind, zumindest teilweise synchronisierbar ist, wobei die Schweißvorrichtung ausgebildet ist, zumindest zeitweise eine Verbindung mit einem externen Speicher und/oder einem Netzwerk und/oder einer Cloud, in denen die externe Datenbank gespeichert ist, aufzubauen.

13. Schweißvorrichtung nach einem der Ansprüche 10 bis 12, **dadurch gekennzeichnet, dass** zumindest ein gespeichertes Abfolgeschema vom Anwender über eine Ein- oder Ausgabeeinheit programmierbar ist und/oder dass ein aktuell ausgewähltes Abfolgeschema über eine Benutzerschnittstelle bzw. über eine Ein- und Ausgabeeinheit darstellbar ist.

14. Schweißvorrichtung nach einem der Ansprüche 10 bis 13, **dadurch gekennzeichnet, dass** zumindest eine Kenngröße, welche eine Qualität und/oder ein Zündverhalten des jeweils verwendeten Abfolgeschemas bewertet, ermittelbar ist, wobei die ermittelte Kenngröße gegebenenfalls gespeichert und/oder über eine Benutzerschnittstelle bzw. über eine Ein- und Ausgabeeinheit darstellbar ist.

15. Schweißvorrichtung nach einem der Ansprüche 10 bis 14, **dadurch gekennzeichnet, dass** die Schweißvorrichtung ausgebildet ist, einen lernfähigen Algorithmus anzuwenden und ein für eine optimale Zündung geeignetes Abfolgeschema automatisch auszuwählen und anzupassen.

## Claims

1. Method for contactlessly striking an arc (1) between an electrode (2) of a welding head (3) and a material surface (4) of a workpiece (5) for a welding process, **characterized in that** a first ignition voltage pulse with a first or second polarity is generated between the electrode (2) and the material surface (4), wherein, after having been struck and, where applicable, after a polarity reversal, the arc (1) is maintained with the second polarity or with an alternating polarity, wherein, in the event of an ignition failure, after the first ignition voltage pulse, a sequence of ignition voltage pulses is generated according to a sequence pattern until successful striking of the arc (1), wherein the sequence pattern comprises a number of ignition voltage pulses with the first polarity and a number of ignition voltage pulses with the second polarity, and wherein an ignition pause is provided between ignition voltage pulses with the first polarity and ignition voltage pulses with the second polarity.

2. Method according to claim 1, **characterized in that** the sequence pattern is defined by an alternating sequence of an ignition voltage pulse with the first polarity followed by an ignition voltage pulse with the second polarity, or vice versa, or **in that** the sequence pattern is defined by a first fixed or variable number of ignition voltage pulses with the first polarity followed by a second fixed or variable number of successive ignition voltage pulses with the second polarity, or vice versa.

3. Method according to one of claims 1 through 2, **characterized in that**, when the arc (1) is struck following an ignition voltage pulse with the first polarity, the arc is maintained for a warm-up period with the first polarity, after which the polarity is reversed to the second polarity.

4. Method according to claim 3, **characterized in that**, if the arc is extinguished during the polarity reversal, the previously started sequence of ignition voltage pulses is continued in accordance with the sequence pattern.

5. Method according to one of claims 1 through 4, **characterized in that** at least one parameter that evaluates a quality and/or an ignition behavior of the sequence pattern used is determined, wherein, where applicable, the determined parameter is stored and/or is displayed via a user interface or via an input and output unit.

6. Method according to claim 5, **characterized in that**, if the parameter falls below or exceeds or reaches a previously defined limit value, an alternative sequence pattern is automatically selected.

7. Method according to claim 6, **characterized in that** the alternative sequence pattern is either randomly selected from several sequence patterns or is generated with the aid of an optionally adaptive algorithm.

8. Method according to one of claims 1 through 7, **characterized in that** the welding process is a DC welding process, at which the contactless striking of the arc occurs during the welding process, **or in that** the welding process is an AC welding process or a DC welding process, at which the contactless striking of the arc occurs at the start of the welding process.

9. Method according to one of claims 1 through 8, **characterized in that,** in the sequence pattern, the ignition voltage pulses undergo a polarity reversal twice.

10. Welding device (6) with a welding head (3), on which there is provided an electrode (2), wherein the electrode (2) is connected to a supply unit (7) by which a voltage (U) can be applied in controlled fashion between the electrode (2) and a material surface (4) of a workpiece (5), **characterized in that** the supply unit (7) is configured, for contactless striking of an arc (1) between the electrode (2) and the material surface (4), to produce a first ignition voltage pulse with a first or second polarity and to maintain the arc (1) with the second polarity after having been struck and, where applicable, after a polarity reversal, wherein the supply unit (7) is further configured, in the event of an ignition failure, after the first ignition voltage pulse until successful striking of the arc (1), to generate a sequence of ignition voltage pulses according to a sequence pattern, wherein the sequence pattern comprises a number of ignition voltage pulses with the first polarity and a number of ignition voltage pulses with the second polarity, and wherein an ignition pause is provided between ignition voltage pulses with the first polarity and ignition voltage pulses with the second polarity.

11. Welding device according to claim 10, **characterized in that** an internal database containing stored sequence patterns for different materials and/or surfaces is stored in the welding device, in particular in an open-loop and/or closed-loop control unit (13) of the welding device.

12. Welding device according to claim 11, **characterized in that** the internal database is at least partially synchronizable with an external database in which sequence patterns are stored, wherein the welding device is configured to establish at least temporarily a connection to an external memory and/or a network and/or a cloud in which the external database is stored.

13. Welding device according to one of claims 10 through 12, **characterized in that** at least one stored sequence pattern is programmable by a user via an input or output unit and/or **in that** a currently selected sequence pattern can be displayed via a user interface or via an input and output unit.

14. Welding device according to one of claims 10 through 13, **characterized in that** at least one parameter that evaluates a quality and/or an ignition behavior of the sequence pattern used can be determined, wherein the determined parameter, where applicable, is stored and/or can be displayed via a user interface or via an input and output unit.

15. Welding device according to one of claims 10 through 14, **characterized in that** the welding device is configured to apply an adaptive algorithm and to automatically select and adapt a sequence pattern suitable for optimal striking.

## Revendications

1. Procédé permettant d'amorcer sans contact un arc électrique (1) entre une électrode (2) d'une tête de soudage (3) et une surface de matériau (4) d'une pièce (5) pour un processus de soudage, **caractérisé en ce qu'**une première impulsion de tension d'amorçage comportant une première ou une seconde polarité est générée entre l'électrode (2) et la surface de matériau (4), dans lequel l'arc électrique (1) est maintenu après l'amorçage, et éventuellement après une inversion de polarités, avec la seconde polarité ou avec une polarité changeante, dans lequel, en cas d'échec d'amorçage après la première impulsion de tension d'amorçage et jusqu'à l'amorçage réalisé avec succès de l'arc électrique (1), une séquence d'impulsions de tension d'amorçage est générée conformément à un schéma de séquence, dans lequel le schéma de séquence comprend un nombre d'impulsions de tension d'amorçage comportant la première polarité et un nombre d'impulsions de tension d'amorçage comportant la seconde polarité, et dans lequel une pause d'amorçage est prévue entre les impulsions de tension d'amorçage comportant la première polarité et les impulsions de tension d'amorçage comportant la seconde polarité.

2. Procédé selon la revendication 1, **caractérisé en ce que** le schéma de séquence est défini par une séquence alternée de respectivement une impulsion de tension d'amorçage comportant la première polarité suivie d'une impulsion de tension d'amorçage comportant la seconde polarité, ou inversement, **ou en ce que** le schéma de séquence est défini par un premier nombre fixe ou variable d'impulsions de tension d'amorçage comportant la première polarité suivi d'un second nombre fixe ou variable d'impulsions de tension d'amorçage successives comportant la seconde polarité, ou inversement.

3. Procédé selon l'une des revendications 1 à 2, **caractérisé en ce que,** lors d'un amorçage de l'arc électrique (1), après une impulsion de tension d'amorçage comportant la première polarité, l'arc électrique est maintenu à la première polarité pendant une période de chauffage, après quoi une inversion de polarités sur la seconde polarité est réalisée.

4. Procédé selon la revendication 3, **caractérisé en ce que,** lors d'une extinction de l'arc électrique pendant l'inversion de polarités, la séquence d'impulsions de tension d'amorçage commencée précédemment se poursuit conformément au schéma de séquence.

5. Procédé selon l'une des revendications 1 à 4, **caractérisé en ce qu'**au moins une caractéristique est déterminée, laquelle évalue une qualité et/ou un comportement d'amorçage du schéma de séquence respectivement employé, dans lequel la caractéristique déterminée est éventuellement mémorisée et/ou représentée par l'intermédiaire d'une interface utilisateur ou par l'intermédiaire d'une unité d'entrée et de sortie.

6. Procédé selon la revendication 5, **caractérisé en ce que,** lors de la non-atteinte, ou du dépassement, ou de l'atteinte d'une valeur limite définie précédemment de la caractéristique, un schéma de séquence alternatif est automatiquement sélectionné.

7. Procédé selon la revendication 6, **caractérisé en ce que** le schéma de séquence alternatif est soit sélectionné de manière aléatoire parmi plusieurs schémas de séquence, soit généré à l'aide d'un algorithme pouvant éventuellement être entraîné.

8. Procédé selon l'une des revendications 1 à 7, **caractérisé en ce que** le processus de soudage est un processus de soudage CC dans lequel l'amorçage sans contact de l'arc électrique a lieu pendant le processus de soudage, **ou en ce que** le processus de soudage est un processus de soudage CA ou un processus de soudage CC dans lequel l'amorçage sans contact a lieu au début du processus de soudage.

9. Procédé selon l'une des revendications 1 à 8, **caractérisé en ce que,** dans le schéma de séquence, les polarités des impulsions de tension d'amorçage sont inversées au moins deux fois.

10. Dispositif de soudage (6) comportant une tête de soudage (3) sur laquelle est prévue une électrode (2), dans lequel l'électrode (2) est connectée à une unité d'alimentation (7) avec laquelle une tension (U) peut être appliquée de manière régulée entre l'électrode (2) et une surface de matériau (4) d'une pièce (5), **caractérisé en ce que** l'unité d'alimentation (7) est configurée pour générer une première impulsion de tension d'amorçage, comportant une première ou une seconde polarité, pour l'amorçage sans contact d'un arc électrique (1) entre l'électrode (2) et la surface de matériau (4), et pour maintenir l'arc électrique (1) après l'amorçage, et éventuellement après une inversion de polarités, avec la seconde polarité, dans lequel l'unité d'alimentation (7) est en outre configurée pour générer, en cas d'échec d'amorçage après la première impulsion de tension d'amorçage et jusqu'à l'amorçage réalisé avec succès de l'arc électrique (1), une séquence d'impulsions de tension d'amorçage conformément à un schéma de séquence, dans lequel le schéma de séquence comprend un nombre d'impulsions de tension d'amorçage comportant la première polarité et un nombre d'impulsions de tension d'amorçage comportant la seconde polarité, et dans lequel une pause d'amorçage est prévue entre les impulsions de tension d'amorçage comportant la première polarité et les impulsions de tension d'amorçage comportant la seconde polarité.

11. Dispositif de soudage selon la revendication 10,
**caractérisé en ce qu'**une base de données interne comportant des schémas de séquence enregistrés pour différents matériaux et/ou surfaces est enregistrée dans le dispositif de soudage, en particulier dans une unité de commande et/ou de régulation (13) du dispositif de soudage.

12. Dispositif de soudage selon la revendication 11, **caractérisé en ce que** la base de données interne peut être au moins partiellement synchronisée avec une base de données externe dans laquelle des schémas de séquence sont enregistrés, dans lequel le dispositif de soudage est configuré pour établir au moins temporairement une connexion avec une mémoire externe et/ou un réseau et/ou un nuage informatique, dans lesquels la base de données externe est enregistrée.

13. Dispositif de soudage selon l'une des revendications 10 à 12, **caractérisé en ce qu'**au moins un schéma de séquence enregistré peut être programmé par l'opérateur par l'intermédiaire d'une unité d'entrée ou de sortie **et/ou en ce qu'**un schéma de séquence actuellement sélectionné peut être représenté par l'intermédiaire d'une interface utilisateur ou par l'intermédiaire d'une unité d'entrée et de sortie.

14. Dispositif de soudage selon l'une des revendications 10 à 13,
**caractérisé en ce qu'**au moins une caractéristique peut être déterminée, laquelle évalue une qualité et/ou un comportement d'amorçage du schéma de séquence respectivement employé, dans lequel la caractéristique déterminée est éventuellement mémorisée et/ou peut être représentée par l'intermédiaire d'une interface utilisateur ou par l'intermédiaire d'une unité d'entrée et de sortie.

15. Dispositif de soudage selon l'une des revendications 10 à 14,
**caractérisé en ce que** le dispositif de soudage est configuré pour opérer un algorithme pouvant être entraîné et pour sélectionner et adapter automatiquement un schéma de séquence approprié pour un amorçage optimal.
